# EUROPÄISCHE PATENTSCHRIFT

(11) **EP 3 447 904 B1**
(45) Veröffentlichungstag und Bekanntmachung des Hinweises auf die Patenterteilung: **20.03.2024**
(21) Anmeldenummer: 17187110.6
(22) Anmeldetag: 21.08.2017
(51) Int. Cl.: H02P 6/00, H02P 25/064, H02P 25/062, B60L 13/03, B65G 54/02, H02K 41/03

(54) **STEUERUNG VON LANGSTATORLINEARMOTOR-SPULEN EINES LANGSTATORLINEARMOTOR-STATORS**
CONTROL OF LONG STATOR LINEAR MOTOR COILS OF A LONG STATOR LINEAR MOTOR STATOR
COMMANDE DE BOBINES DE MOTEUR LINÉAIRE À STATOR DÉPLOYÉ D'UN STATOR DE MOTEUR LINÉAIRE À STATOR DÉPLOYÉ

(43) Veröffentlichungstag der Anmeldung: 27.02.2019
(73) Patentinhaber: B&R Industrial Automation GmbH, 5142 Eggelsberg (AT)
(72) Erfinder: Plainer, Manuel, 4890 Weißenkirchen i.A. (AT); Brucker, Stefan, 5020 Salzburg (AT); Weber, Andreas, 5020 Salzburg (AT)
(74) Vertreter: Patentanwälte Pinter & Weiss OG

(56) Entgegenhaltungen:
- WO-A2-2005/110898
- WO-A2-2008/005428
- US-A1- 2017 117 829

## Beschreibung

Die gegenständliche Erfindung behandelt ein Verfahren und ein System zum Regeln der Bewegung von zwei Transporteinheiten eines Langstatorlinearmotors, welcher eine Vielzahl n von in Bewegungsrichtung nebeneinander angeordneten LLM-Spulen umfasst, wobei die erste Transporteinheit eine erste Anzahl von in Bewegungsrichtung nebeneinander angeordneten ersten Antriebsmagneten aufweist, und die zweite Transporteinheit eine zweite Anzahl von in Bewegungsrichtung nebeneinander angeordneten zweiten Antriebsmagneten aufweist, die Bewegung der ersten Transporteinheit von einem zugeordneten ersten Transportregler geregelt wird, indem der erste Transportregler einer ersten Teilmenge der Vielzahl n LLM-Spulen jeweils vorzugebende elektrische Größen berechnet, die Bewegung der zweiten Transporteinheit von einem zugeordneten zweiten Transportregler geregelt wird, indem der zweite Transportregler einer zweiten Teilmenge der Vielzahl n LLM-Spulen jeweils vorzugebende elektrische Größen berechnet.

Bei einem Langstatorlinearmotor (LLM) ist eine Vielzahl von nebeneinander angeordneten elektrischen LLM-Spulen, die den Stator bilden, nebeneinander entlang einer Transportstrecke ortsfest angeordnet. Auf einer Transporteinheit ist eine Anzahl von Antriebsmagneten, entweder als Permanentmagnete oder als elektrische Spule oder Kurzschlusswicklung, angeordnet, die mit den LLM-Spulen zusammenwirken. Der Langstatorlinearmotor kann als Synchronmaschine, sowohl selbsterregt oder fremderregt, oder als Asynchronmaschine ausgeführt sein. Durch das Zusammenwirken der (elektro)magnetischen Felder der Antriebsmagnete und der LLM-Spulen wirkt eine Vortriebskraft auf die Transporteinheit, welche die Transporteinheit in Bewegungsrichtung vorwärts bewegt. Dies erfolgt durch Ansteuerung der einzelnen LLM-Spulen zur Regelung des magnetischen Flusses. Damit wird die Größe der Vortriebskraft beeinflusst und die Transporteinheit kann in gewünschter Weise entlang der Transportstrecke bewegt werden. Dabei ist es auch möglich, entlang der Transportstrecke eine Vielzahl von Transporteinheiten anzuordnen, deren Bewegungen einzeln und unabhängig voneinander kontrolliert werden können, indem die jeweils mit einer Transporteinheit zusammenwirkenden Antriebsspulen bestromt werden. In der Regel wird durch einen Transportregler eine elektrische Größe vorgegeben, welche entweder direkt oder über einen nachgeschalteten Spulenregler eine Klemmenspannung an die Spulenklemmen anlegt bzw. einen Spulenstrom in die LLM-Spule einprägt. Langstatorlinearmotoren zeichnen sich insbesondere durch eine bessere und flexiblere Ausnützung über den gesamten Arbeitsbereich (Drehzahl, Position, Geschwindigkeit, Beschleunigung), eine individuelle Regelung/Steuerung der beweglichen Transporteinheiten (Shuttles), eine verbesserte Energieausnützung, eine Reduktion der Wartungskosten aufgrund der geringeren Anzahl an Verschleißteilen, einen einfachen Austausch der Transporteinrichtungen, effizientes Monitoring und Fehlerdetektion und eine Optimierung des Produktstromes aus. Es werden vermehrt Langstatorlinearmotoren als Ersatz für konventionelle Stetigförderer bzw. rotativ-zu-linear Übersetzungseinheiten (z.B. rotativer Motor an Förderband, Riemen, Ketten etc.) eingesetzt, um den Anforderungen moderner, flexibler Logistikeinheiten gerecht zu werden. Beispiele solcher Langstatorlinearmotoren können der WO 2013/143783 A1, der US 6,876,107 B2, der US 2013/0074724 A1 oder der WO 2004/103792 A1 entnommen werden.

Um eine Transporteinheit entlang des Stators zu bewegen, wird wie erwähnt entlang des Stators mit den LLM-Spulen ein bewegtes Magnetfeld erzeugt, das mit den Antriebsmagneten der Transporteinheiten zusammenwirkt. Hierzu werden Klemmenspannungen bzw. Spulenströme der LLM-Spulen über einen Transportregler oder über einen nachgeschalteten Spulenregler geregelt. Zur Ansteuerung der LLM-Spulen, bzw. der Spulenregler der LLM-Spulen wird üblicherweise pro Transporteinheit ein Transportregler verwendet, der, analog zum rotativen Fall, ausgehend von einem d/q-Koordinatensystem die an die einzelnen LLM-Spulen anzulegenden Ströme und Spannungen regelt. Eine Transporteinheit bewegt sich also entlang der LLM-Spulen des Stators, wobei ein Transportregler die nebeneinanderliegenden LLM-Spulen des Stators gewissermaßen durch ein elektromagnetisches Feld aktuiert.

Weisen jedoch zwei entlang des Stators bewegte Transporteinheiten unterschiedliche Geschwindigkeiten auf, so nähern sich diese gegebenenfalls einander an. Beispielsweise kann auch eine erste Transporteinheit still stehen und sich eine weitere Transporteinheit auf die erste Transporteinheit zubewegen, oder zwei Transporteinheiten entgegengesetzte Richtungen aufweisen. Um eine Kollision der Transporteinheiten zu vermeiden, ist üblicherweise eine Sicherheitsmaßnahme zur Verhinderung dessen vorhanden.

Die US 2017/0117829 A1 behandelt eine Ansteuerung der Spulenströme von LLM-Spulen, wobei Kupferverluste minimiert werden. Hierbei wird berücksichtigt, dass die LLM-Spulen eines Langstatorlinearmotors auch von den Antriebsmagneten der Transporteinheiten beeinflusst werden. Spuleneinheiten bestehen aus einem Verbund an Spulen. Bekanntermaßen muss die Summe der Antriebsmagnete einer Transporteinheit größer als die einzeln ansteuerbaren LLM-Spulen des Stators sein, da die Transporteinheit ansonsten nicht bewegt werden könnte. In der zweiten Ausführung wird auch ein Fall behandelt, bei dem zwei Transporteinheiten mit einer Spuleneinheit überlappen. Es wird der Spulenstrom der mittleren LLM-Spule dieser Spuleneinheit auf Null gesetzt. Dieser "fehlende" Strom wird jedoch von den weiteren LLM-Spulen der Spuleneinheit kompensiert. In der dritten Ausführung wird ein an die Spuleneinheit anzulegender Spulenstrom berechnet, wenn eine Transporteinheit nur von einer Spuleneinheit gesteuert wird, d.h. mit den Spulen der jeweiligen Spuleneinheit, überlappt.

Die WO 2008/005428 A1 offenbart eine Transporteinrichtung, wobei zwei Blöcke der Transportstrecke überlappen und eine Auswahl von Invertern, welche Subblöcke im Überlappungsbereich ansteuern, getroffen wird.

Es ist Aufgabe der gegenständlichen Erfindung ein Verfahren und eine Vorrichtung zur Regelung von Spannungen, bzw. Strömen von LLM-Spulen eines LLM-Stators anzugeben, die es ermöglicht kompaktere Transporteinheiten zu konzipieren und eine gegenseitige Beeinflussung der beiden Transporteinheiten verringert.

Diese Aufgabe wird erfindungsgemäß durch ein Verfahren gelöst, bei dem geprüft wird, ob einer LLM-Spule als elektrische Größe eine erste Regelgröße vom ersten Transportregler vorgegeben wird und derselben LLM-Spule als elektrische Größe gleichzeitig eine zweite Regelgröße vom zweiten Transportregler vorgegeben wird und einen Langstatorlinearmotor mit einer derartigen Vorrichtung und in diesem Fall der LLM-Spule entweder eine weitere Regelgröße, die sich anhand einer vorgegebenen Funktion f aus der ersten Regelgröße und/oder der zweiten Regelgröße ergibt, der LLM-Spule vorgegeben werden oder die Spulenklemmen der LLM-Spule kurzgeschlossen werden.

Weiters wird diese Aufgabe durch ein System gelöst, bei welchem neben dem ersten und dem zweiten Transportregler auch eine Regelungseinheit vorhanden ist, die mit dem ersten und zweiten Transportregler und einer LLM-Spule verbindbar ist, und die ausgestaltet ist, zu prüfen, ob der LLM-Spule als elektrische Größe eine erste Regelgröße vom ersten Transportregler vorgegeben wird und derselben LLM-Spule als elektrische Größe gleichzeitig eine zweite Regelgröße vom zweiten Transportregler vorgegeben wird und in diesem Fall der LLM-Spule als elektrische Größe entweder eine weitere Regelgröße, die sich anhand einer vorgegebenen Funktion f aus der ersten Regelgröße und/oder der zweiten Regelgröße ergibt, vorzugeben, oder die Spulenklemmen der LLM-Spule kurzuschließen.

Die elektrische Größe, bzw. die Regelgröße kann direkt eine Klemmenspannung bzw. einen Spulenstrom der LLM-Spulen darstellen und direkt den LLM-Spulen zugeführt werden oder auch einer Verstärkerschaltung zugeführt werden. Die Verstärkerschaltung kann, je nachdem ob die elektrische Größe, bzw. Regelgröße, eine Spannung oder einen Strom darstellt einen Spulenregler, d.h. einen Spannungsregler oder Stromregler, beinhalten und weiter beispielsweise eine Klemmenspannung (z.B. ein PWM-Signal) an die Spulenklemmen der LLM-Spule anlegen. Die Verstärkerschaltung zum Bereitstellen der notwendigen Leistung kann somit am Transportregler, an einem Spulenregler oder auch an der Spule direkt vorgesehen sein. Insbesondere wenn die Regelgröße eine Klemmenspannung darstellt, kann die Regelgröße auch als reine Steuergröße realisiert sein, die lediglich verstärkt wird. Bei Transporteinheiten nach dem Stand der Technik kann der Fall auftreten, dass sich zwei Transporteinheiten bis auf einen physischen Kontakt aneinander annähern, womit eine LLM-Spule von beiden Transporteinheiten überlappt wäre. Die Transporteinheiten waren bislang aber derart ausgestaltet, dass die Antriebsmagnete jeweils mittig platziert sind und sich nicht bis an den Rand der Transporteinheit erstrecken. Damit kann die LLM-Spule trotz Überlappung mit den Transporteinheiten, nicht von Antriebsmagneten beider Transporteinheiten gleichzeitig überlappt werden. Erfindungsgemäß können die Transporteinheiten nun kompakter konzipiert werden, oder auch die Antriebsmagneten einen größeren Bereich der Transporteinheiten einnehmen, weil ein möglicher Konflikt bei der Regelung einer LLM-Spule erkannt und gelöst wird. Damit könnte zwar der Fall eintreten, dass sich zwei Transporteinheiten selbst vor einer möglichen Kollision und damit vor Eingreifen einer möglichen Sicherheitsmaßnahme so nahe beieinander befinden, dass zumindest ein Teil der ersten und zweiten Antriebsmagnete der ersten und zweiten Transporteinheit mit einer LLM-Spule überlappen. Das würde bedeuten, dass der der ersten Transporteinheit zugehörige Transportregler die elektrische Größe dieser LLM-Spule in Form der ersten Regelgröße vorgeben will und ebenso der der zweiten Transporteinheit zugehörige Transportregler die elektrische Größe derselben LLM-Spule in Form der zweiten Regelgröße vorgeben will, da sich die Antriebsmagnete der beiden Transporteinheiten im Einflussbereich dieser LLM-Spule befinden. Damit wäre eine eindeutige Regelung der elektrischen Größe dieser LLM-Spule nicht mehr möglich und es gäbe einen Konflikt zwischen den beiden Transportreglern. Die betreffende LLM-Spule würde vom ersten Transportregler eine erste Regelgröße als Sollwert für die elektrische Größe, sowie vom zweiten Transportregler eine zweite Regelgröße als (anderen) Sollwert vorgegeben bekommen. Erfindungsgemäß ist jedoch für die Regelung der elektrischen Größe jeder LLM-Spule eine eindeutige Vorgabe vorhanden und es gibt keinen Konflikt zwischen dem ersten Transportregler und dem zweiten Transportregler, welche ursprünglich derselben LLM-Spule eine erste bzw. zweite Regelgröße vorgeben wollten. D.h. das selbst wenn die erste Teilmenge der LLM-Spulen - d.h. die LLM-Spulen, die vom ersten Transportregler gesteuert werden sollten - sich mit der zweiten Teilmenge der LLM-Spulen - d.h. die LLM-Spulen, die vom zweiten Transportregler gesteuert werden sollten - überlagern, alle elektrischen Größen der LLM-Spulen von der Regelungseinheit eindeutig geregelt werden, obwohl eine Überschneidung der ersten Teilmenge mit der zweiten Teilmenge LLM-Spulen vorliegt.

Wenn sich die beiden Transporteinheiten z.B. derart nahe aneinander annähern, dass die Antriebsmagnete beider Transporteinheiten mit derselben LLM-Spule zumindest teilweise überlappen, so würde dies also bedeuten, dass die elektrische Größe dieser LLM-Spule von zwei Transportreglern gleichzeitig geregelt werden sollte. Es sollte damit je eine erste und eine zweite Regelgröße als elektrische Größe vorgegeben werden, was zu einem Konflikt führen würde. Dies wird erfindungsgemäß gelöst, indem von der Regelungseinheit eine weitere Regelgröße vorgegeben wird. Die weitere Regelgröße ergibt sich anhand einer vorgegebenen Funktion f aus der ersten Regelgröße und/oder der zweiten Regelgröße.

Alternativ können die Spulenklemmen der LLM-Spule auch kurzgeschlossen werden.

Durch die erfindungsgemäße Regelung solcher LLM-Spulen werden die planmäßigen Bewegungen der Transporteinheiten nur unwesentlich beeinflusst.

"Überlappen" der Antriebsmagnete mit den LLM-Spulen bedeutet nicht nur, dass sich die Position der LLM-Spulen und der Antriebsmagnete überlappen, sondern auch dass eine ausreichende magnetische Kopplung zwischen der LLM-Spule und den Antriebsmagneten der jeweiligen Transporteinheit besteht, was auf einen Antriebsmagneten auch, z.B. aufgrund von Streufeldern, in einem geringen Abstand (entsprechend einem Bruchteil der Längsausdehnung der LLM-Spule) neben der LLM-Spule der Fall sein kann.

Es kann auch vorgesehen sein, dass ein Transportregler die elektrische Größe einer LLM-Spule regelt, die mit dem Transportregler bzw. der korrespondierenden Transporteinheit zugehörigen Antriebsmagneten nicht überlappt. Diese LLM-Spule, deren elektrische Größe geregelt wird, kann sich in Bewegungsrichtung gesehen direkt vor und hinter der Transporteinheit befinden. Eine derartige Regelung von elektrischen Größen von LLM-Spulen, die sich neben der mit den Antriebsmagneten überlappenden LLM-Spule befinden, wird auch "Soft-Mapping" genannt. Die Regelung der elektrischen Größe einer LLM-Spule, die mit den Antriebsmagneten einer Transporteinheit vollständig überlappt, wird hingegen als "Hard-Mapping" bezeichnet, bei einer teilweisen Überlappung als "Medium-Mapping". Oftmals ist die Regelung von zwei LLM-Spulen pro Transporteinheit ausreichend, insbesondere wenn sich die Antriebsmagnete einer Transporteinheit über die Länge von drei LLM-Spulen ausdehnen. Es sollten zumindest so viele LLM-Spulen geregelt werden, wie von den Antriebsmagneten der jeweiligen Transporteinheit zumindest teilweise überlappt werden. Untersuchungen der Anziehungskraft der Transporteinheit auf den Stator und der wirkenden Vortriebskraft haben ergeben, dass eine Stromwelligkeit bei Verwendung weiterer LLM-Spulen reduziert werden kann. Auch weitere Eigenschaften des Systems, wie z.B. eine glattere Vortriebskraft oder ein besserer Wirkungsgrad, kann durch Regelung weiterer Spulen erzielt werden. Damit ist jedoch ein "Soft-Mapping" dieser weiteren LLM-Spulen notwendig. Insbesondere eine Regelung von sechs LLM-Spulen zum Steuern einer Transporteinheit in Form eines Soft-Mappings kann vorteilhaft sein, um ein symmetrisches Dreiphasensystem zu erzeugen. So werden für die Bildung der Wanderwelle sechs LLM-Spulen geregelt, d.h. dass pro Transporteinheit so viele LLM-Spulen vor bzw. nach den LLM-Spulen, die in Bewegungsrichtung mit den Antriebsmagneten dieser Transporteinheit überlappen, in Form eines Soft-Mappings geregelt werden, dass pro Transporteinheit insgesamt die elektrischen Grö-βen von sechs LLM-Spulen geregelt werden.

Es kann die weitere Regelgröße auch der ersten Regelgröße entsprechen, was insbesondere vorteilhaft ist, wenn die LLM-Spule mit den ersten Antriebsmagneten der ersten Transporteinheit teilweise oder vollständig überlappt und mit den zweiten Antriebsmagneten der zweiten Transporteinheiten nicht überlappt. Das würde bedeuteten, dass der erste Transportregler die elektrische Größe nach einem Hard-Mapping (vollständige Überlappung) bzw. einem Medium Mapping (teilweise Überlappung) auf die erste Regelgröße regeln wollen würde und der zweite Transportregler die elektrische Größe nach einem Soft-Mapping auf die zweite Regelgröße regeln wollen würde, was ohne die erfindungsgemäße Lösung zu einem Konflikt führen würde. Besonders vorteilhaft ist es hier natürlich, wenn die Regelungseinheit die erste Regelgröße vom ersten Transportregler übernimmt und der LLM-Spule als elektrische Größe vorgibt. Damit hat die zweite Regelgröße des zweiten Transportreglers keinen Einfluss auf die elektrische Größe. Das bedeutet also, dass in diesem Fall das Hard/Medium-Mapping über das Soft-Mapping dominiert.

Analog kann die weitere Regelgröße der zweiten Regelgröße entsprechen, was insbesondere vorteilhaft ist, wenn die LLM-Spule mit den zweiten Antriebsmagneten der zweiten Transporteinheit teilweise oder vollständig überlappt und mit den Antriebsmagneten der ersten Transporteinheiten nicht überlappt. Das würde bedeuteten, dass der zweite Transportregler die elektrische Größe der LLM-Spule nach einem Hard-Mapping bzw. einem Medium Mapping auf die erste Regelgröße regeln wollen würde und der erste Transportregler die elektrische Größe derselben LLM-Spule nach einem Soft-Mapping auf die zweite Regelgröße. Besonders vorteilhaft ist es hier äquivalent zum obigen Fall, wenn die Regelungseinheit die zweite Regelgröße vom zweiten Transportregler übernimmt und der LLM-Spule als elektrische Größe vorgibt. Hier hat also die erste Regelgröße des ersten Transportreglers keinen Einfluss auf die elektrische Größe, d.h. dass auch in diesem Fall Hard/Medium-Mapping über das Soft-Mapping dominiert.

Weiters kann die weitere Regelgröße jedoch auch betragsmäßig kleiner gleich der ersten Regelgröße und kleiner gleich der zweiten Regelgröße sein.

Vorteilhaft ist es auch, wenn die weitere Regelgröße einen Wert zwischen der ersten Regelgröße und der zweiten Regelgröße hat, wobei es ganz besonders vorteilhaft ist, wenn die weitere Regelgröße einem Mittelwert der ersten Regelgröße und der zweiten Regelgröße entspricht, wobei der Mittelwert auch, z.B. abhängig von der jeweiligen Position der Transporteinheit, gewichtet werden kann.

Die weitere Regelgröße kann auch der ersten oder der zweiten Regelgröße entsprechen, beispielsweise abhängig davon ob die erste oder zweite Regelgröße kleiner oder größer ist, oder auch einen bestimmten oder berechneten Wert unter oder über der ersten/zweiten Regelgröße annehmen, was auch beispielsweise davon abhängig davon sein kann, ob die erste oder zweite Regelgröße kleiner/größer ist.

Zusammengefasst wird der Konflikt einer vorzugebenden ersten Regelgröße durch einen ersten Transportregler und einer vorzugebenden zweiten Regelgröße durch einen zweiten Transportregler an die selbe LLM-Spule für den Fall, dass die ersten und die zweiten Antriebsmagneten die LLM-Spule teilweise überlappen - d.h. vom ersten und vom zweiten Transportregler ein Medium-Mapping vorgesehen ist - geregelt, indem von der Regelungseinheit der LLM-Spule eine weitere Regelgröße als elektrische Größe an die LLM-Spule vorgegeben wird oder die Spulenklemmen der LLM-Spule kurzgeschlossen werden. Auch wenn die erste und zweite Regelgröße aufgrund eines vorgesehenen Soft-Mappings als elektrische Größe der selben LLM-Spule vorgegeben werden soll, oder wenn die erste (bzw. zweite) vorzugebende Regelgröße auf einem Medium-/Hard-Mapping und die zweite (bzw. erste) vorzugebende Regelgröße auf einem Soft-Mapping basieren, kann eine weitere Regelgröße als elektrische Größe vorgegeben werden - oder die Spulenklemmen der LLM-Spule kurzgeschlossen werden - um den Konflikt zu lösen. Die weitere Regelgröße kann sich wiederum über eine vorgegebene Funktion f aus der ersten Regelgröße und/oder der zweiten Regelgröße ergeben und damit beispielsweise gleich der ersten Regelgröße oder der zweiten Regelgröße, betragsmäßig kleiner gleich der ersten Regelgröße und der zweiten Regelgröße sein, oder sich aus einem Mittelwert der ersten und der zweiten Regelgröße ergeben.

Die Regelungseinheit, die die Vorgabe der weiteren Regelgröße oder das Kurzschließender Spulenklemmen der LLM-Spule verursacht, kann integraler Bestandteil des ersten und/oder zweiten Transportreglers sein oder zwischen ersten und zweiten Transportregler und die LLM-Spule geschaltet sein.

Besonders vorteilhafterweise ist je eine Regelungseinheit pro LLM-Spule vorhanden.

Ein Langstatorlinearmotor mit einer Vielzahl n von in Bewegungsrichtung nebeneinander angeordneten LLM-Spulen kann somit mit einem erfindungsgemäßen System zum Regeln der Bewegung von zwei Transporteinheiten versehen sein.

Die Position der Antriebsmagnete, und damit auch der Transporteinheiten, können z.B. mittels Positionssensoren bestimmt werden, welche üblicherweise bereits im Langstatorlinearmotor integriert sind. Überlappen Antriebsmagnete einer Transporteinheit eine LLM-Spule, so kann davon ausgegangen werden, dass die Antriebsmagnete und LLM-Spule in magnetischer Wechselwirkung stehen und es wird die elektrische Größe vom der betreffenden Transporteinheit zugehörigen Transportregler vorgegeben. Wird einer LLM-Spule nur von einem Transportregler eine elektrische Größe vorgegeben, so kann diese elektrische Größe vom Transportregler auf bekannte Weise geregelt werden.

Es könnten die Transportregler die elektrischen Größen auch mittels einer der jeweiligen LLM-Spule zugeordneten Spulenregelungseinheit regeln. Die Spulenregelungseinheiten wären damit den Transportreglern untergeordnet. Es könnten natürlich auch mehrere Spulenregelungseinheiten in einer gemeinsamen Einheit integriert sein.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig.1 einen Langstatorlinearmotor als Transporteinrichtung mit zwei voneinander distanzierten Transporteinheiten
Fig. 2a den Langstatorlinearmotor mit direkt nebeneinander befindlichen Transporteinheiten,
Fig. 2b die Regelung der sechsten LLM-Spule bei Einfluss durch zwei Transportregler,
Fig. 2c die Regelung der vierten LLM-Spule bei Einfluss durch zwei Transportregler
Fig. 3 den Langstatorlinearmotor nahe beieinander befindlichen Transporteinheiten.

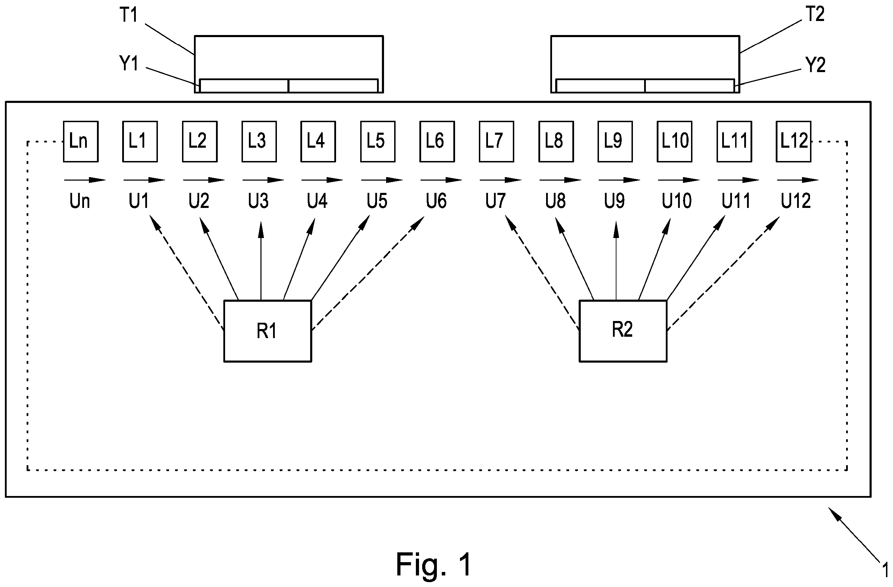

In Fig.1 ist eine Transporteinrichtung in Form eines Langstatorlinearmotors (LLM) beispielhaft dargestellt. Ein Transportabschnitt 1 bildet allgemein jeweils einen Teil eines Langstators eines LLM aus und kann dabei in bekannter Weise auch noch weiter unterteilt sein, beispielsweise in eine Anzahl von einzelnen Transportsegmenten, die auch eine nicht in sich geschlossene Bahnen bilden können. Die Transporteinrichtung besteht in Fig. 1 beispielhaft nur aus einem Transportabschnitt 1. Entlang des Transportabschnitts 1 ist in Längsrichtung in bekannter Weise eine Vielzahl n von elektrischen LLM-Spulen L1,...,Ln angeordnet, die mit einer Anzahl Antriebsmagneten Y1, Y2 an einer Anzahl an Transporteinheiten T1, T2 zusammenwirken. In bekannter Weise wird mittels Transportreglern R1, R2 durch Kontrolle der elektrischen Größen U1,...,Un, der einzelnen LLM-Spulen L1,...,Ln für jede derTransporteinheiten T1, T2 unabhängig eine Vortriebskraft erzeugt, die die Transporteinheiten T1, T2 in Längsrichtung entlang der Transportstrecke, bzw. des Transportabschnitts 1 individuell (Geschwindigkeit, Beschleunigung, Bahn, Richtung) und unabhängig (bis auf die Vermeidung von möglichen Kollisionen) von den anderen Transporteinheiten T1, T2 bewegt. Dabei werden vorzugsweise nur diejenigen LLM-Spulen L1,...,Ln durch Vorgeben einer elektrischen Größe direkt oder über einen weiteren Spulenregler versorgt, die mit den Antriebsmagneten Y1, Y2 der Transporteinheiten T1, T2, bzw. mit deren magnetischen Feld, zusammenwirken. Nachdem das magnetische Feld der Antriebsmagneten Y1, Y2 in Bewegungsrichtung vor und hinter den Antriebsmagneten Y1, Y2 rasch abfällt, sollten nur diejenigen LLM-Spulen L1,...,Ln elektrisch versorgt werden, die von Antriebsmagneten Y1, Y2 überlappt werden (in Fig.1 beispielswiese die LLM-Spulen L2, L3, L4, L5 für die Transporteinheit T1). Es können aber auch zusätzlich eine Anzahl von LLM-Spulen L1,...,Ln in Bewegungsrichtung vor und hinter den Antriebsmagneten Y1, Y2 elektrisch versorgt werden (in Fig.1 beispielswiese die LLM-Spulen L1, L6 für die Transporteinheit T1), was zu einer gleichmäßigeren Bewegung der Transporteinheiten T1, T2 führt.

Bekanntermaßen ist es üblich mindestens zwei Antriebsmagnete Y1, Y2 pro Transporteinheit T1, T2 zu verwenden. In Fig.1-3 sind aus Übersichtsgründen beispielhaft nur zwei Transporteinheiten T1, T2, zwei zugehörige Antriebsmagnete Y1, Y2 und zwei zugehörige Transportregler R1, R2 dargestellt. In der Regel überlappen mehrere LLM-Spulen L1,...,Ln mit den Antriebsmagneten Y1, Y2 der jeweiligen Transporteinheiten T1, T2, was bedeutet, dass ein Transportregler R1, R2 die Regelung mehrerer elektrischer Größen U1,...,Un übernimmt, um mittels der durch die fließenden Spulenströme erzeugten Magnetfelder mehrerer LLM-Spulen L1,...,Ln gemeinsam eine Vortriebskraft zu erzeugen. Dabei ist es prinzipiell für die Transportregler R1, R2 nur notwendig, die LLM-Spulen L1,...,Ln elektrisch zu versorgen, die gerade mit einer Transporteinheit T1, T2, bzw. deren Antriebsmagneten Y1, Y2, überlappen, d.h. zusammenwirken. Die erzeugten Vortriebskräfte müssen dabei für die einzelnen Transporteinheiten T1, T2 natürlich nicht gleich sein. Auch die in die jeweiligen LLM-Spulen L1,...,Ln eingeprägten Spulenströme müssen natürlich nicht gleich groß sein. Die Transportregler R1, R2 können jedoch auch die elektrischen Größen U1,...,U2 von LLM-Spulen L1,...,Ln regeln, die nicht mit den Antriebsmagneten Y1, Y2 der jeweiligen Transporteinheiten Y1, Y2 zusammenwirken, was hier als Soft-Mapping bezeichnet wird.

Es wird dem Transportregler R1, R2 oftmals für jede zu bewegende Transporteinheit T1, T2 laufend eine Positionsvorgabe (äquivalent auch Geschwindigkeitsvorgabe) vorgegeben (beispielsweise von einer übergeordneten Anlagenregelung oder von extern), die, in an sich bekannter Weise, in jedem Zeitschritt der Regelung in für die Bewegung benötigte elektrische Größen U1,...,Un umgesetzt werden. Ein Transportregler R1, R2 könnte dabei in bekannter Weise natürlich auch hierarchisch aufgebaut sein, beispielsweise mit einem Positionsregler, Geschwindigkeitsregler und/oder Kraftregler für jede Transporteinheit T1, T2 und einem Spulenregler, d.h. Stromregler und/oder Spannungsregler, für jede LLM-Spule L1,...,Ln, etc.

Die elektrischen Größen U1,...,Un können direkt eine Klemmenspannung bzw. einen Spulenstrom der LLM-Spulen L1,...,Ln darstellen, können aber auch einer Verstärkerschaltung zugeführt werden, welche wiederum eine Klemmenspannung an die Spulenklemmen der LLM-Spulen L1,...,Ln anlegt. Eine Verstärkerschaltung kann an den Transportreglern R1, R2, an zusätzlichen Spulenreglern oder auch an der LLM-Spule L1,...,Ln direkt vorgesehen sein. Der Übersichtlichkeit halber wurden in den Figuren 1-3 keine Verstärkerschaltungen oder zusätzliche Spulenregler eingezeichnet.

Die Antriebsmagnete Y1, Y2 können als Elektromagnete (Erregungsspulen) und/oder als Permanentmagnete ausgeführt sein. Üblicherweise befinden sich pro Transporteinheit T1, T2 eine Anzahl von in Bewegungsrichtung nebeneinander angeordneten Antriebsmagneten Y1, Y2, wobei in den Figuren 1-3 zwecks einfacherer Darstellung nur ein Antriebsmagnet Y1, Y2 pro Transporteinheit T1, T2 dargestellt ist. Die LLM-Spulen L1,...,Ln können auf einem ferromagnetischen Kern (beispielsweise ein Eisen Blechpaket) angeordnet sein, oder natürlich auch kernlos ausgeführt sein. Nachdem das grundlegende Prinzip eines Langstatorlinearmotors hinreichend bekannt ist, wird hier aber nicht näher darauf eingegangen.

Der erste Transportregler R1 und der zweite Transportregler R2 regeln in Fig. 1-3 die elektrischen Größen U1,...,Un der jeweiligen LLM-Spulen L1,...,Ln derart, dass die dem ersten Transportregler R1 bzw. zweitem Transportregler R2 zugehörige erste Transporteinheit T1 bzw. zweite Transporteinheit T2 entlang des Stators bewegt wird. Die Transportregler R1, R2 können also jeweils alle elektrischen Größen U1,...Un aller mit einer Transporteinheit T1, T2 zusammenwirkenden LLM-Spulen L1,...,Ln regeln, wobei die zu regelnden elektrischen Größen U1,...Un von der Position der jeweiligen Transporteinheit T1, T2 in Bewegungsrichtung entlang des Stators abhängt.

Wie erwähnt werden in erster Linie die elektrischen Größen U1,...,Un der LLM-Spulen L1,...,Ln, die sich in Bewegungsrichtung gesehen mit den Antriebsmagneten Y1, Y2 einer Transporteinheit T1, T2 vollständig oder teilweise überlappen, vom zugeordneten Transportregler R1, R2 geregelt, um die Bewegung der Transporteinheit T1, T2 zu kontrollieren. Eine Regelung der elektrischen Größen U1,...Un bei vollständiger Überlappung der Antriebsmagneten Y1, Y2 mit der jeweiligen LLM-Spule L1,...Ln wird als Hard-Mapping, bei teilweiser Überlappung als Medium-Mapping bezeichnet. In Fig. 1 würde somit der erste Transportregler R1 die zweite elektrische Größe U2, die dritte elektrische Größe U3, die vierte elektrische Größe U4 und die fünfte elektrische Größe U5 regeln (mit durchgezogenen Pfeilen angedeutet), da die zweite LLM-Spule L2, die dritte LLM-Spule L3, die vierte LLM-Spule L4 und die fünfte LLM-Spule L5 mit dem ersten Antriebsmagnet Y1 der ersten Transporteinheit T1 überlappen. Der erste Transportregler R1 berechnet also die vorzugebenden elektrischen Grö-βen U2, U3, U4, U5 an die jeweiligen LLM-Spulen L2, L3, L4, L5, die einer ersten Teilmenge der Vielzahl n an Spulen L1,...,Ln entspricht. Der zweite Transportregler R2 würde in gleicher Weise die achte elektrische Größe U8, die neunte elektrische Größe U9, die zehnte elektrische Größe U10 und die elfte elektrische Größe U11 regeln (ebenso mit durchgezogenen Pfeilen angedeutet), da die achte LLM-Spule L8, die neunte LLM-Spule L9, die zehnte LLM-Spule L10 und die elfte LLM-Spule L11 mit dem zweiten Antriebsmagnet Y2 der zweiten Transporteinheit Z2 überlappen. Der zweite Transportregler R2 berechnet somit die vorzugebenden elektrischen Größen U8, U9, U10, U11 an die jeweiligen LLM-Spulen L8, L9, L10, L11, die einer zweiten Teilmenge der Vielzahl n Spulen L1,...,Ln entspricht. Damit ist eine eindeutige Regelung der einzelnen elektrischen Größen U2, U3, U4, U5, U8, U9, U10, U11 der LLM-Spulen L2, L3, L4, L5, L8, L9, L10, L11 gewährleistet, da keine der Transportregler R1, R2 dieselben elektrischen Größen U2, U3, U4, U5, U8, U9, U10, U11 zu regeln versucht, d.h. dass sich die erste und zweite Teilmenge der LLM-Spulen L1,...,Ln nicht überschneiden.

Es kann auch vorgesehen sein, dass ein Transportregler R1, R2 im Rahmen eines Soft-Mappings die Regelung von LLM-Spulen übernimmt, die sich in Bewegungsrichtung gesehen vor und hinter der jeweiligen Transporteinheit T1, T2 befinden, d.h. vor und hinter den LLM-Spulen die mit den Antriebsmagneten Y1, Y2 der jeweiligen Transporteinheit T1, T2 vollständig oder teilweise überlappen, beispielsweise die LLM-Spulen L1, L6, L7, L12 in Fig.1. So würden bei Soft-Mapping vom ersten Transportregler R1 auch die erste elektrische Größe U1 der ersten LLM-Spule L1 und die sechste elektrische Größe U6 der sechsten LLM-Spule L6 geregelt werden, sowie vom zweiten Transportregler R2 auch die siebte elektrische Größe U7 der LLM-Spule L7 und die zwölfte elektrische Größe U12 der zwölften LLM-Spule L12. Die erste Teilmenge wird also um die LLM-Spulen L1 und L6 erweitert, die zweite Teilmenge wird um die LLM-Spulen L7 und L12 erweitert. Auch für diesen Fall ist bei der Position der Transporteinheiten T1, T2 nach Fig. 1 eine eindeutige Regelung der einzelnen elektrischen Größen U1, U6, U7, U12 der LLM-Spulen L1, L6, L7, L12 gewährleistet, da keiner der Transportregler R1, R2 versucht dieselben elektrischen Größen U1, U6, U7, U12 zu regeln. Die erste und zweite Teilmenge überschneiden sich also abermals nicht. Soft-Mapping-Regelungen werden in den Figuren 1-3 mit strichlierten Pfeilen angedeutet.

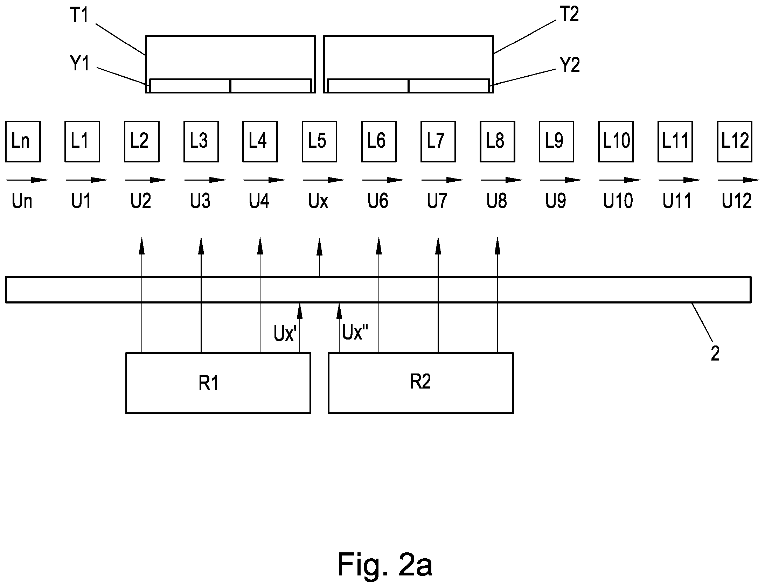

In Fig. 2a ist ein Ausschnitt der Transporteinrichtung aus Fig. 1 dargestellt, wobei zwei Transporteinheiten T1, T2 nebeneinander positioniert sind. Eine Regelungseinheit 2 ist jedoch zwischen die beiden Transportregler R1, R2 und die LLM-Spulen L1,...,Ln geschaltet. Es wäre natürlich auch möglich, dass für mehrere, bzw. jede LLM-Spule L1,...,Ln eine Regelungseinheit 2 vorhanden ist oder die Regelungseinheit(en) 2 integraler Bestandteil der Transportregler R1, R2 ist/sind. Die erste Transporteinheit T1 befindet sich wie in Fig. 1 in einer Position, in der die zweite LLM-Spule L2, die dritte LLM-Spule L3, die vierte LLM-Spule L4 und die fünfte LLM-Spule L5 mit dem ersten Antriebsmagnet Y1 der ersten Transporteinheit Z1 überlappen. Die zweite Transporteinheit T2 befindet sich jedoch direkt neben der ersten Transporteinheit T1, womit der zweite Antriebsmagnet Y2 die fünfte LLM-Spule L5, die sechste LLM-Spule L6, die siebte LLM-Spule L7 und die achte LLM-Spule L8 überlappt. Die elektrischen Größen U2, U3, U4, U6, U7, US werden, da hier kein Konflikt zwischen den Transportreglern R1, R2 auftritt, nicht von der Regelungseinheit 2 beeinflusst und den LLM-Spulen L2, L3, L4, L6, L7, L8 vorgegeben. Die weiteren elektrischen Größen U1, U9, U10, U11, U12,...,Un werden in Fig. 2a nicht aktiv von den Transportreglern R1, R2 und damit auch nicht von der Regelungseinheit 2 geregelt. Diese nicht aktiv geregelten elektrischen Größen U1, U9, U10, U11, U12,...,Un könnten natürlich von der Regelungseinheit 2 auch auf Null geregelt werden.

Damit wird die fünfte LLM-Spule L5 sowohl vom ersten Antriebsmagnet Y1, als auch vom zweiten Antriebsmagnet Y2 teilweise überlappt, womit die fünfte LLM-Spule L5 Teil der ersten Teilmenge und der zweiten Teilmenge ist. Mit Fokus auf diese fünfte LLM-Spule L5 soll das erfindungsgemäße Verfahren somit in Fig. 2a betrachtet werden: Der erste Transportregler R1 will an die betreffende LLM-Spule Lx (hier L5) eine erste Regelgröße Ux`und der zweite Transportregler R2 eine zweite Regelgröße Ux" vorgeben, d.h. dass der erste Transportregler R1 und der zweite Transportregler eine Medium-Mapping-Regelung beabsichtigen, wieder mit durchgezogenen Pfeilen angedeutet. Die Regelungseinheit 2 erkennt diesen Spulenkonflikt jedoch und gibt der betreffenden LLM-Spule Lx (hier L5) eine weitere Regelgröße Ux vor. Diese weitere Regelgröße Ux ergibt sich vorteilhafterweise anhand einer vorgegebenen Funktion f aus der ersten Regelgröße Ux' (und/oder der zweiten Regelgröße Ux": Ux=f(Ux`,Ux"), bzw. Ux=f(Ux`) oder Ux=f(Ux. Es kann ganz besonders vorteilhafterweise als weitere Regelgröße Ux ein Mittelwert der ersten Regelgröße Ux`und der zweiten Regelgröße Ux" oder auch die erste Regelgröße Ux' oder die zweite Regelgröße Ux" verwendet werden.

Für die Regelung der Bewegung einer Transporteinheit T1, T2 ist die jeweilige Istposition der Transporteinheit T1, T2 immer bekannt, beispielswiese können mit geeigneten und bekannten Positionssensoren die jeweiligen Istpositionen erfasst werden. Nachdem auch die Konstruktion und die Geometrie der Transporteinheiten T1, T2 und auch die Anordnung der Antriebsmagneten Y1, Y2 bekannt ist, kann mit den bekannten Positionen immer erkannt werden, wenn ein derartiger Spulenkonflikt auftritt.

Alternativ könnten die Spulenklemmen der betreffenden (hier fünften) LLM-Spule kurzgeschlossen werden, was bedeutet, dass von keinem der beiden Transportregler aktiv eine Regelgröße Ux`, Ux" an die betreffende (hier fünfte) LLM-Spule L5 vorgegeben wird, womit der Konflikt ebenso beseitigt ist.

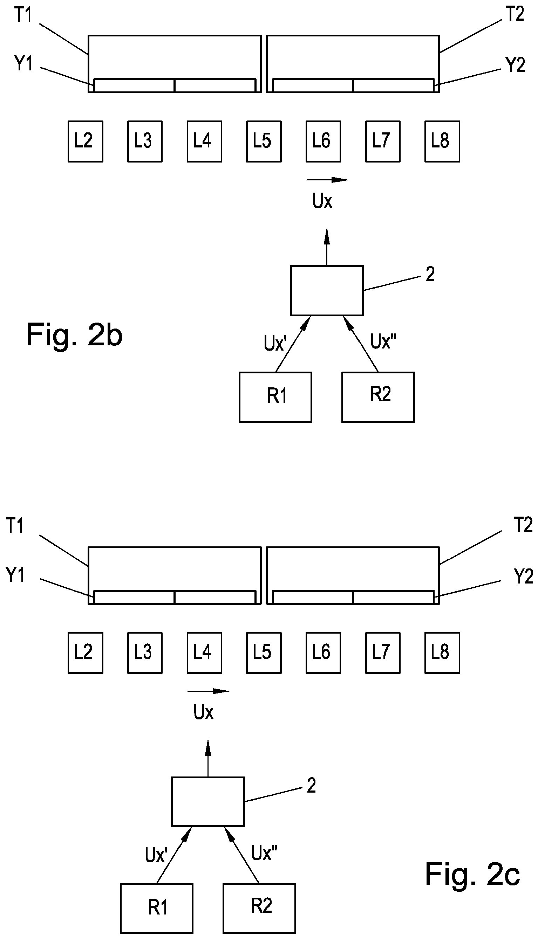

Fig. 2b zeigt die Konstellation nach Fig. 2a mit Fokus auf die sechste LLM-Spule L6, wobei die elektrischen Größen der sonstigen LLM-Spulen L1,...,L5, L7,...,Ln hier nicht betrachtet werden. In diesem Fall ist auch ein Soft-Mapping vorgesehen, womit der erste Transportregler R1 beabsichtigt an die sechste LLM-Spule L6 eine erste Regelgröße Ux' vorzugeben, was durch den Pfeil vom ersten Transportregler R1 zur Regelungseinheit 2 angedeutet ist. Die sechste LLM-Spule L6 würde aber auch vom zweiten Transportregler R2 im Rahmen eines Hard-Mappings geregelt werden, der die zweite Regelgröße Ux" vorgibt, was durch den Pfeil vom zweiten Transportregler R1 zur Regelungseinheit angedeutet ist. Das bedeutet, dass die sechste LLM-Spule L6 teil der ersten Teilmenge und der zweiten Teilmenge ist. Vorteilhafterweise wird als Lösung dieses Konflikts von der Regelungseinheit 2 eine weitere Regelgröße Ux an die sechste LLM-Spule L6 vorgegeben. Diese weitere Regelgröße Ux ergibt sich vorteilhafterweise anhand einer vorgegebenen Funktion f aus der ersten Regelgröße Ux'und/oder der zweiten Regelgröße Ux": Ux=f(Ux`,Ux"), bzw. Ux=f(Ux`), bzw. Ux=f(Ux"). Es kann ganz besonders vorteilhafterweise als weitere Regelgröße Ux die zweite Regelgröße Ux" oder auch die erste Regelgröße Ux' verwendet werden, wobei bei gleichzeitig beabsichtigter Medium/Hard- und Soft-Mapping-Regelung der selben LLM-Spule Lx (hier Medium-Mapping der LLM-Spule L6) Medium/Hard-Mapping gegenüber dem Soft-Mapping bevorzugt wird. Das bedeutet hier also, dass die zweite Regelgröße Ux" die vorteilhafterweise direkt vom zweiten Transportregler R2 bereitgestellt wird von der Regelungseinheit 2 als weitere Regelgröße Ux der sechsten LLM-Spule L6 vorgegeben wird. Die vom ersten Transportregler R1 zur Verfügung gestellte erste Regelgröße Ux' hätte somit hier keinen Einfluss auf die an die sechste LLM-Spule L6 vorgegebene weitere Regelgröße Ux.

Fig. 2c zeigt die Konstellation nach Fig. 2a in analoger Weise wie in Fig. 2b, jedoch mit Fokus auf die vierte LLM-Spule L4, die hier Teil der ersten Teilmenge und der zweiten Teilmenge ist. Hier beabsichtigt der erste Transportregler R1 an die vierte LLM-Spule L4 eine erste Regelgröße Ux' im Rahmen eines Soft-Mappings vorzugeben (Pfeil vom ersten Transportregler R1 zur Regelungseinheit 2). Der zweite Transportregler R2 beabsichtigt jedoch auch im Rahmen eines Hard-Mappings eine zweite Regelgröße Ux" der vierten LLM-Spule L4 vorzugeben (Pfeil vom zweiten Transportregler R1 zur Regelungseinheit 2). Vorteilhafterweise gibt auch hier die Regelungseinheit 2 der vierten LLM-Spule L4 eine weitere Regelgröße Ux vor. Diese weitere Regelgröße Ux ergibt sich vorteilhafterweise anhand einer vorgegebenen Funktion f aus der ersten Regelgröße Ux' und/oder der zweiten Regelgröße Ux": Ux=f(Ux`,Ux"), bzw. Ux=f(Ux`), bzw. Ux=f(Ux"). Es kann auch für den vorliegenden Fall als weitere Regelgröße Ux ein Mittelwert der ersten Regelgröße Ux` und zweite Regelgröße Ux" verwendet werden. Auch kann als weitere Regelgröße Ux die erste Regelgröße Ux` oder zweite Regelgröße Ux" dienen, wobei auch hier bei gleichzeitig beabsichtigter Medium /Hard- und Soft-Mapping-Regelung einer LLM-Spule Lx (hier L4) die Medium/Hard-Mapping bevorzugt wird - also hier das Medium-Mapping durch die erste Regelgröße Ux` welche vorteilhafterweise direkt vom ersten Transportregler R1 bereitgestellt und von der Regelungseinheit 2 zur vierten LLM-Spule weitergeleitet wird. Der zweite Transportregler hätte in diesem Fall keinen Einfluss auf die vierte elektrische Größe Ux der vierten LLM-Spule L4.

In der Konstellation nach Fig. 2a würde bei einer Soft-Mapping-Regelung beispielsweise vom ersten Transportregler R1 auch die elektrische Größe U1 der ersten LLM-Spule L1 geregelt werden, oder vom zweiten Transportregler R2 die elektrische Größe U9 der neunten LLM-Spule L9. In beiden Fällen tritt jedoch kein Konflikt auf, da der jeweils andere Transportregler R1, R2 die elektrische Größe U1, U9 der jeweiligen LLM-Spule L1, L9 nicht regeln will und kein Konflikt vorhanden ist, der von eine Regelungseinheit 2 gelöst werden müsste.

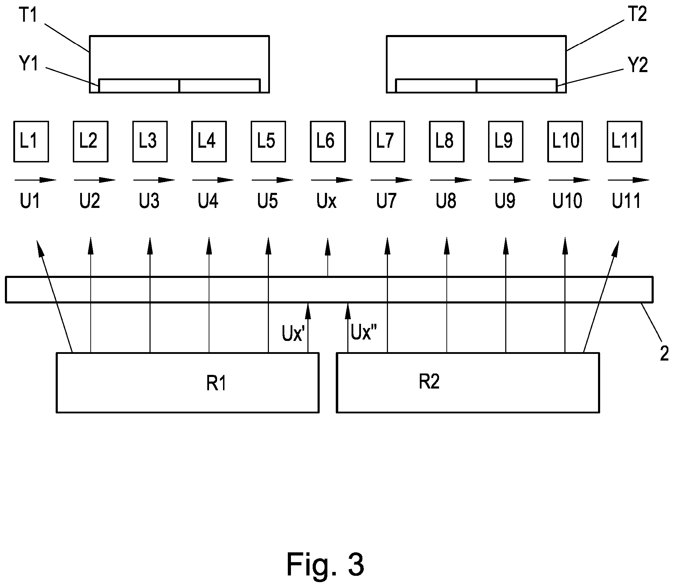

In Fig. 3 ist eine Konstellation dargestellt, in der sich zwei Transporteinheiten T1, T2 derart annähern, bzw. bereits angenähert sind, dass keine der LLM-Spulen L1,...,Ln von den Antriebsmagneten Y1, Y2 beider Transporteinheiten T1, T2 überlappt wird. Die erste Transporteinheit T1 befindet sich abermals in einer Position, in der die zweite LLM-Spule L2, die dritte LLM-Spule L3, die vierte LLM-Spule L3 und die fünfte LLM-Spule L5 mit dem ersten Antriebsmagnet Y1 der ersten Transporteinheit T1 überlappen. Damit regelt der erste Transportregler R1 die zweite elektrische Größe U2, die dritte elektrische Größe U3, die vierte elektrische Größe U4 und die fünfte elektrische Größe U5. Die zweite Transporteinheit T2 befindet sich jedoch näher als in Fig. 1 neben der ersten Transporteinheit T1, womit der zweite Antriebsmagnet Y2 die siebte LLM-Spule L7, die achte LLM-Spule L8, die neunte LLM-Spule L9 und die zehnte LLM-Spule L10 überlappen. Damit überlappt die sechste LLM-Spule L6 weder mit dem ersten Antriebsmagnet Y1, noch mit dem zweiten Antriebsmagnet Y2. Ist jedoch im Rahmen einer Soft-Mapping-Regelung vorgesehen, dass beide Transportregler R1, R2 die Regelung der sechsten LLM-Spule L6 übernehmen, so will der erste Transportregler R1 der sechsten LLM-Spule L6 eine erste Regelgröße Ux` vorgeben und der zweite Transportregler R2 an die sechste LLM-Spule L6 eine zweite Regelgröße Ux" vorgeben, womit die sechste LLM-Spule L6 Teil der ersten Teilmenge und der zweiten Teilmenge ist. Dies ist hier beispielhaft der Fall, da sich die sechste LLM-Spule L6 neben den mit den Antriebsmagneten Y1, Y2 überlappenden Spulen U5 und U7 befindet. Erfindungsgemäß wird für diesen Fall von der Regelungseinheit 2 eine weitere Regelgröße Ux an die sechste LLM-Spule L6 vorgegeben. Diese weitere Regelgröße Ux kann sich ebenso anhand einer vorgegebenen Funktion f aus der ersten Regelgröße Ux' und/oder der zweiten Regelgröße Ux"ergeben: Ux=f(Ux`,Ux"), bzw. Ux=f(Ux`), bzw. Ux=f(Ux"). Vorteilhafterweise entspricht auch für den Fall, dass beide Transportregler R1, R2 im Rahmen eines Soft-Mappings an dieselbe LLM-Spule (hier L6) eine erste bzw. zweite Regelgröße Ux`, Ux" vorgeben wollen, die weitere vorgegebene Regelgröße Ux dem Mittelwert der ersten Regelgröße Ux` und der zweiten Regelgröße Ux", kann aber auch einer der beiden Regelgrößen Ux`, Ux" entsprechen, oder es können die Spulenklemmen der betreffenden LLM-Spule L6 kurzgeschlossen werden, womit keine elektrische Größe aktiv an die betreffende LLM-Spule (hier L6) vorgegeben werden.

Es kann also für alle Konfliktsituationen zwischen der ersten und zweiten Regelgröße Ux' Ux", welche einer LLM-Spule Lx jeweils vom ersten bzw. zweiten Transportregler R1, R2 als elektrische Größe vorgegeben werden sollen, d.h. Soft-Mapping+Soft-Mapping, Soft-Mapping+Medium/Hard-Mapping, Medium-Mapping+Medium-Mapping) durch die Regelungseinheit eine weitere Regelgröße Ux vorgegeben werden. Vorzugsweise entspricht die weitere Regelgröße einem Mittelwert der ersten Regelgröße Ux` und der zweiten Regelgröße Ux". Sie kann aber beispielsweise auch gleich der ersten Regelgröße Ux` oder gleich der zweiten Regelgröße Ux" sein.

In der Konstellation nach Fig. 3 würde bei einer Soft-Mapping-Regelung beispielsweise vom ersten Transportregler R1 auch die Regelgröße U1 der ersten LLM-Spule L1 geregelt und vom zweiten Transportregler R2 die Regelgröße U11 der elften LLM-Spule L11. In beiden Fällen tritt jedoch kein Konflikt auf, da der jeweils andere Transportregler R1, R2 die elektrische Größe U1, U11 der jeweiligen LLM-Spule L1, L11 nicht regeln will, womit auch hier die jeweiligen elektrischen Größen U1, U11 von der Regelungseinheit 2 zu den jeweiligen LLM-Spulen L1, L11 durgeschliffen werden.

Abschließend sei nochmals darauf hingewiesen, dass nicht lediglich eine Regelungseinheit 2, wie in Fig. 2a oder Fig 3 angedeutet, zwischen allen LLM-Spulen L1,...,Ln und den Transportreglern R1, R2 platziert sein muss. Es könne auch für einzelne LLM-Spulen L1,...,Ln einzelne Regelungseinheiten 2 vorhanden sein können (wie in Fig. 2b oder 2c angedeutet), oder die Regelungseinheit(en) integraler Bestandteil der Transportregler R1 R2 sein und weitere Spulenregler, Verstärkerschaltungen usw. vorhanden sein.

## Patentansprüche

1. Verfahren zum Regeln der Bewegung von zwei Transporteinheiten (T1, T2) eines Langstatorlinearmotors, welcher eine Vielzahl n von in Bewegungsrichtung nebeneinander angeordneten LLM-Spulen (L1,...,Ln) umfasst, wobei die erste Transporteinheit (T1) eine erste Anzahl von in Bewegungsrichtung nebeneinander angeordneten ersten Antriebsmagneten (Y1) aufweist, und die zweite Transporteinheit (T2) eine zweite Anzahl von in Bewegungsrichtung nebeneinander angeordneten zweiten Antriebsmagneten (Y2) aufweist,
- die Bewegung der ersten Transporteinheit (T1) von einem zugeordneten ersten Transportregler (R1) geregelt wird, indem der erste Transportregler (R1) einer ersten Teilmenge der Vielzahl n LLM-Spulen (L1,...,Ln) jeweils vorzugebende elektrische Größen berechnet,
- die Bewegung der zweiten Transporteinheit (T2) von einem zugeordneten zweiten Transportregler (R2) geregelt wird, indem der zweite Transportregler (R2) einer zweiten Teilmenge der Vielzahl n LLM-Spulen (L1,...,Ln) jeweils vorzugebende elektrische Grö-βen berechnet,
**dadurch gekennzeichnet, dass** geprüft wird, ob einer LLM-Spule (Lx) als elektrische Größe eine erste Regelgröße (Ux') vom ersten Transportregler (R1) vorgegeben wird und derselben LLM-Spule (Lx) als elektrische Größe gleichzeitig eine zweite Regelgröße (Ux") vom zweiten Transportregler (R2) vorgegeben wird,
**und dass** in diesem Fall der LLM-Spule (Lx) als elektrische Größe entweder eine weitere Regelgröße (Ux), die sich anhand einer vorgegebenen Funktion f aus der ersten Regelgröße (Ux') und/oder der zweiten Regelgröße (Ux") ergibt, vorgegeben wird, oder die Spulenklemmen der LLM-Spule (Lx) kurzgeschlossen werden.

2. Verfahren nach Anspruch 1, **dadurch gekennzeichnet, dass** die weitere Regelgröße (Ux) einen Wert zwischen der ersten Regelgröße (Ux') und der zweiten Regelgröße (Ux") hat.

3. Verfahren nach Anspruch 2, **dadurch gekennzeichnet, dass** die weitere Regelgröße (Ux) einem Mittelwert der ersten Regelgröße (Ux') und der zweiten Regelgröße (Ux") entspricht.

4. Verfahren nach Anspruch 1, **dadurch gekennzeichnet, dass** die weitere Regelgröße (Ux) der ersten Regelgröße (Ux') oder der zweiten Regelgröße (Ux") entspricht.

5. System zum Regeln der Bewegung von zwei Transporteinheiten (T1, T2) eines Langstatorlinearmotors, welcher eine Vielzahl n von in Bewegungsrichtung nebeneinander angeordneten LLM-Spulen (L1,...,Ln) umfasst, wobei die erste Transporteinheit (T1) eine erste Anzahl von in Bewegungsrichtung nebeneinander angeordneten ersten Antriebsmagneten (Y1) aufweist, und die zweite Transporteinheit (T2) eine zweite Anzahl von in Bewegungsrichtung nebeneinander angeordneten zweiten Antriebsmagneten (Y2) aufweist, und wobei in dem System
- ein der ersten Transporteinheit (T1) zugeordneter erster Transportregler (R1) vorhanden ist, der die Bewegung der ersten Transporteinheit (T1) regelt, indem er einer ersten Teilmenge der Vielzahl n LLM-Spulen (L1,...,Ln) jeweils vorzugebende elektrische Grö-βen berechnet, und in dem System
- ein der zweiten Transporteinheit (T2) zugeordneter zweiter Transportregler (R2) vorhanden ist, der die Bewegung der zweiten Transporteinheit (T2) regelt, indem er einer zweiten Teilmenge der Vielzahl n LLM-Spulen (L1,...,Ln) jeweils vorzugebende elektrische Größen berechnet,
**dadurch gekennzeichnet, dass** weiterhin in dem System eine Regelungseinheit (2) vorhanden ist, welche mit dem ersten und zweiten Transportregler (R1, R2) und einer LLM-Spule (Lx) verbindbar ist, und welche ausgestaltet ist, zu prüfen, ob der LLM-Spule (Lx) als elektrische Größe eine erste Regelgröße (Ux') vom ersten Transportregler (R1) vorgegeben wird und derselben LLM-Spule (Lx) als elektrische Größe gleichzeitig eine zweite Regelgröße (Ux") vom zweiten Transportregler (R2) vorgegeben wird und in diesem Fall der LLM-Spule (Lx) als elektrische Größe entweder eine weitere Regelgröße (Ux), die sich anhand einer vorgegebenen Funktion f aus der ersten Regelgröße (Ux') und/oder der zweiten Regelgröße (Ux") ergibt, vorzugeben, oder die Spulenklemmen der LLM-Spule (Lx) kurzzuschließen.

6. System nach Anspruch 5, **dadurch gekennzeichnet, dass** die Regelungseinheit (2) integraler Bestandteil des ersten und/oder zweiten Transportreglers (R1, R2) ist.

7. System nach Anspruch 5, **dadurch gekennzeichnet, dass** die Regelungseinheit (2) zwischen den ersten Transportregler (R1) und die LLM-Spule (Lx) und zwischen den zweiten Transportregler (R2) und die LLM-Spule (Lx) geschaltet ist.

8. System nach einem der Ansprüche 5 bis 7, **dadurch gekennzeichnet, dass** je eine Regelungseinheit (2) pro LLM-Spule (L1,...,Ln) vorhanden ist.

9. Langstatorlinearmotor mit einer Vielzahl n von in Bewegungsrichtung nebeneinander angeordneten LLM-Spulen und einem System zum Regeln der Bewegung von zwei Transporteinheiten nach einem der Ansprüche 5 bis 8.

## Claims

1. Method for controlling the movement of two transport units (T1, T2) of a long-stator linear motor comprising a plurality n of LLM coils (L1, ..., Ln) arranged adjacently in the direction of movement, wherein the first transport unit (T1) comprises a first number of first drive magnets (Y1) arranged adjacently in the direction of movement, and the second transport unit (T2) comprises a second number of second drive magnets (Y2) arranged adjacently in the direction of movement,
- the movement of the first transport unit (T1) being controlled by an assigned first transport controller (R1), in that the first transport controller (R1) calculates electrical variables to be specified respectively for a first portion of the plurality n of LLM coils (L1, ..., Ln),
- the movement of the second transport unit (T1) being controlled by an assigned second transport controller (R2), in that the second transport controller (R2) calculates electrical variables to be specified respectively for a second portion of the plurality n of LLM coils (L1, ..., Ln), **characterized in that**
it is checked, whether a first controlled variable (Ux') is predefined by the first transport controller (R1) for an LLM coil (Lx) as an electrical variable and whether a second controlled variable (Ux") is simultaneously predefined by the second transport controller (R2) to the same LLM coil (Lx) as an electrical variable, **and that**
in this case, either an additional controlled variable (Ux), which is derived from the first controlled variable (Ux') and/or the second controlled variable (Ux") using a predetermined function f (Ux = f(Ux', Ux"), or Ux = f(Ux') or Ux = f(Ux")), is predefined for the LLM coil (Lx) as an electrical variable, or the coil terminals of the LLM coil (Lx) are short-circuited.

2. Method according to claim 0, **characterized in that** the additional controlled variable (Ux) has a value between the first controlled variable (Ux') and the second controlled variable (Ux").

3. Method according to claim 0, **characterized in that** the additional controlled variable (Ux) corresponds to a mean value of the first controlled variable (Ux') and of the second controlled variable (Ux").

4. Method according to claim 0, **characterized in that** the additional controlled variable (Ux) corresponds to the first controlled variable (Ux') or to the second controlled variable (Ux").

5. System for controlling the movement of two transport units (T1, T2) of a long-stator linear motor comprising a plurality n of LLM coils (L1, ..., Ln) arranged adjacently in the direction of movement, wherein the first transport unit (T1) comprises a first number of first drive magnets (Y1) arranged adjacently in the direction of movement, and the second transport unit (T1) comprises a second number of drive magnets (Y2) arranged adjacently in the direction of movement,
- and wherein there is a first transport controller (R1) associated with the first transport unit (T1) in the system, which transport controller (R1) controls the movement of the first transport unit (T1) by calculating electrical variables to be specified respectively for a first portion of the plurality n of LLM coils (L1, ..., Ln),
- and there is a second transport controller (R1) associated with the second transport unit (T2) in the system, which transport controller (R2) controls the movement of the second transport unit (T1) by calculating electrical variables to be specified in respectively for a second portion of the plurality n of LLM coils (L1, ..., Ln),
**characterized in that** furthermore there is a control unit (2) in the system, which control unit (2) is connectable to the first and second transport controllers (R1, R2 and to an LLM coil (Lx) and which control unit (2) is designed to check, whether a first controlled variable (Ux') is predefined by the first transport controller (R1) for the LLM coil (Lx) as an electrical variable and whether a second controlled variable (Ux") is simultaneously predefined by the second transport controller (R2) for the same LLM coil (Lx) as an electrical variable and, in this case, either to predefine an additional controlled variable (Ux), which is derived from the first controlled variable (Ux') and/or the second controlled variable (Ux") using a predetermined function f (Ux = f(Ux', Ux"), or Ux = f(Ux'), or Ux = f(Ux")), for the LLM coil (Lx) as an electrical variable, or to short-circuit the coil terminals of the LLM coil (Lx).

6. System according to claim 0, **characterized in that** the control unit (2) is an integral component of the first and/or second transport controller (R1, R2).

7. System according to claim 0, **characterized in that** the control unit (2) is connected between the first and second transport controllers (R1, R2) and the LLM coil (Lx).

8. System according to any of claims 0 to 0, **characterized in that** there is one control unit (2) for each LLM coil (L1, ..., Ln).

9. Long-stator linear motor comprising a plurality n of LLM coils arranged adjacently in the direction of movement and a system for controlling the movement of two transport units according to any of claims 0 to 0.

## Revendications

1. Procédé permettant de réguler le déplacement de deux unités de transport (T1, T2) d'un moteur linéaire à stator long qui comprend une pluralité n de bobines LLM (L1, ..., Ln) disposées côte à côte dans une direction de déplacement, dans lequel la première unité de transport (T1) présente un premier nombre de premiers aimants d'entraînement (Y1) disposés côte à côte dans la direction de déplacement, et la seconde unité de transport (T2) présente un second nombre de seconds aimants d'entraînement (Y2) disposés côte à côte dans la direction de déplacement,
- le déplacement de la première unité de transport (T1) est régulé par un premier régulateur de transport (R1) associé par le fait que le premier régulateur de transport (R1) calcule respectivement des grandeurs électriques à prédéfinir pour un premier sous-ensemble de la pluralité n de bobines LLM (L1, ..., Ln),
- le déplacement de la seconde unité de transport (T2) est régulé par un second régulateur de transport (R2) associé par le fait que le second régulateur de transport (R2) calcule respectivement des grandeurs électriques à prédéfinir pour un second sous-ensemble de la pluralité n de bobines LLM (L1, ..., Ln),
**caractérisé en ce que** l'on vérifie si une première grandeur de régulation (Ux') est prédéfinie comme grandeur électrique pour une bobine LLM (Lx) par le premier régulateur de transport (R1) et si une seconde grandeur de régulation (Ux") est simultanément prédéfinie comme grandeur électrique pour la même bobine LLM (Lx) par le second régulateur de transport (R2),
**et en ce que**, dans ce cas, soit une grandeur de régulation supplémentaire (Ux), laquelle est donnée à l'aide d'une fonction f prédéfinie à partir de la première grandeur de régulation (Ux') et/ou de la seconde grandeur de régulation (Ux"), est prédéfinie en tant que grandeur électrique pour la bobine LLM (Lx), soit les bornes de bobine de la bobine LLM (Lx) sont court-circuitées.

2. Procédé selon la revendication 1, **caractérisé en ce que** la grandeur de régulation supplémentaire (Ux) possède une valeur comprise entre la première grandeur de régulation (Ux') et la seconde grandeur de régulation (Ux").

3. Procédé selon la revendication 2, **caractérisé en ce que** la grandeur de régulation supplémentaire (Ux) correspond à une valeur moyenne de la première grandeur de régulation (Ux') et de la seconde grandeur de régulation (Ux").

4. Procédé selon la revendication 1, **caractérisé en ce que** la grandeur de régulation supplémentaire (Ux) correspond à la première grandeur de régulation (Ux') ou à la seconde grandeur de régulation (Ux").

5. Système permettant de réguler le déplacement de deux unités de transport (T1, T2) d'un moteur linéaire à stator long qui comprend une pluralité n de bobines LLM (L1, ..., Ln) disposées côte à côte dans une direction de déplacement, dans lequel la première unité de transport (T1) présente un premier nombre de premiers aimants d'entraînement (Y1) disposés côte à côte dans la direction de déplacement, et la seconde unité de transport (T2) présente un second nombre de seconds aimants d'entraînement (Y2) disposés côte à côte dans la direction de déplacement, et dans lequel, dans le système
- un premier régulateur de transport (R1) associé à la première unité de transport (T1) est présent, lequel régule le déplacement de la première unité de transport (T1) en calculant respectivement des grandeurs électriques à prédéfinir pour un premier sous-ensemble de la pluralité n de bobines LLM (L1, ..., Ln), et dans le système
- un second régulateur de transport (R2) associé à la seconde unité de transport (T2) est présent, lequel régule le déplacement de la seconde unité de transport (T2) en calculant respectivement des grandeurs électriques à prédéfinir pour un second sous-ensemble de la pluralité n de bobines LLM (L1, ..., Ln),
**caractérisé en ce qu'**une unité de régulation (2) est en outre présente dans le système, laquelle peut être connectée au premier et au second régulateur de transport (R1, R2) et à une bobine LLM (Lx) et est configurée pour vérifier si une première grandeur de régulation (Ux') est prédéfinie en tant que grandeur électrique pour la bobine LLM (Lx) par le premier régulateur de transport (R1) et si une seconde grandeur de régulation (Ux") est simultanément prédéfinie en tant que grandeur électrique pour la même bobine LLM (Lx) par le second régulateur de transport (R2) et, dans ce cas, soit pour prédéfinir une grandeur de régulation supplémentaire (Ux), laquelle est donnée à l'aide d'une fonction f prédéfinie à partir de la première grandeur de régulation (Ux') et/ou de la seconde grandeur de régulation (Ux"), en tant que grandeur électrique pour la bobine LLM (Lx), soit pour court-circuiter les bornes de bobine de la bobine LLM (Lx).

6. Système selon la revendication 5, **caractérisé en ce que** l'unité de régulation (2) fait partie intégrante du premier et/ou du second régulateur de transport (R1, R2).

7. Système selon la revendication 5, **caractérisé en ce que** l'unité de régulation (2) est montée entre le premier régulateur de transport (R1) et la bobine LLM (Lx) et entre le second régulateur de transport (R2) et la bobine LLM (Lx).

8. Système selon l'une des revendications 5 à 7, **caractérisé en ce que** respectivement une unité de régulation (2) est présente par bobine LLM (L1, ..., Ln).

9. Moteur linéaire à stator long comportant une pluralité n de bobines LLM disposées côte à côte dans une direction de déplacement et un système permettant de réguler le déplacement de deux unités de transport selon l'une des revendications 5 à 8.
